(19) Europäisches Patentamt / European Patent Office / Office européen des brevets

(11) **EP 4 450 474 B1**

(12) **EUROPEAN PATENT SPECIFICATION**

(45) Date of publication and mention
of the grant of the patent:
**29.07.2026 Bulletin 2026/31**

(21) Application number: **23763266.6**

(22) Date of filing: **17.02.2023**

(51) International Patent Classification (IPC):
**B22D 41/54** (2006.01)    **C04B 35/01** (2006.01)
**C04B 35/043** (2006.01)    **C04B 35/101** (2006.01)
**C04B 35/103** (2006.01)    **C04B 35/106** (2006.01)
**C04B 35/185** (2006.01)    **C04B 35/443** (2006.01)
**C04B 35/482** (2006.01)    **C04B 35/66** (2006.01)
**B22D 41/50** (2006.01)    **F27D 1/00** (2006.01)

(52) Cooperative Patent Classification (CPC):
**C04B 35/103; B22D 41/50; B22D 41/54;
C04B 35/013; C04B 35/0435; C04B 35/1015;
C04B 35/106; C04B 35/185; C04B 35/443;
C04B 35/482; C04B 35/66; F27D 1/0006;
F27D 1/0009;** C04B 2235/3206; C04B 2235/3217;
(Cont.)

(86) International application number:
**PCT/JP2023/005644**

(87) International publication number:
**WO 2023/167007 (07.09.2023 Gazette 2023/36)**

(54) **REFRACTORY PRODUCT FOR USE IN CONTINUOUS CASTING**

FEUERFESTES PRODUKT ZUR VERWENDUNG IM STRANGGIESSEN

PRODUIT RÉFRACTAIRE DESTINÉ À ÊTRE UTILISÉ DANS LA COULÉE CONTINUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **02.03.2022 JP 2022032063**

(43) Date of publication of application:
**23.10.2024 Bulletin 2024/43**

(73) Proprietor: **Krosakiharima Corporation
Kitakyushu-shi, Fukuoka 806-8586 (JP)**

(72) Inventors:
• **LI, Ling
Kitakyushu-shi, Fukuoka 806-8586 (JP)**
• **MORIKAWA, Katsumi
Kitakyushu-shi, Fukuoka 806-8586 (JP)**
• **MATSUMOTO, Shigefumi
Kitakyushu-shi, Fukuoka 806-8586 (JP)**

(74) Representative: **Vossius & Partner
Patentanwälte Rechtsanwälte mbB
Siebertstrasse 3
81675 München (DE)**

(56) References cited:
JP-A- 2013 035 040    JP-A- 2017 127 886
JP-A- H01 176 266    JP-A- S6 096 567
JP-B2- 5 637 630    JP-B2- 6 027 676
US-A1- 2011 277 951

(52) Cooperative Patent Classification (CPC): (Cont.)
C04B 2235/3222; C04B 2235/3409;
C04B 2235/3418; C04B 2235/3463;
C04B 2235/3826; C04B 2235/425; C04B 2235/48;
C04B 2235/5248; C04B 2235/5296;
C04B 2235/5427; C04B 2235/5436;
C04B 2235/5472; C04B 2235/72; C04B 2235/77;
C04B 2235/9607; C04B 2235/9676

**Description**

TECHNICAL FIELD

The present invention relates to a refractory product for continuous casting.

BACKGROUND ART

The present inventors disclosed, in Patent Document 1, a refractory material (product) for continuous casting, having both excellent corrosion resistance and thermal shock resistance.

Patent Document 2 discloses a refractory product for continuous casting having a specific particle size distribution, which has a chemical composition wherein, when a total of particles with a size of 0.045 mm or less and the free carbon component in the refractory is taken as 100% by mass: the free carbon component is 3.0% by mass or more and 35.0% by mass or less, and a total of an $SiO_2$ component and a CaO component, in terms of oxide, is 0.4% by mass or more and 5.0% by mass or less, and wherein a remainder of the particles with a size of 0.045 mm or less, excluding the aforementioned free carbon component, $SiO_2$ component, and CaO component, is configured by including a particle group comprising corundum ($Al_2O_3$) and spinel ($Al_2O_3 \cdot MgO$), said particle group having a mineral composition with an average molar ratio ($Al_2O_3/MgO$) of 1.05 or more and 2.35 or less, and wherein a portion excluding the particles with a size of 0.045 mm or less and the free carbon component is composed of at least one of corundum ($Al_2O_3$) and spinel ($Al_2O_3 \cdot MgO$).

CITATION LIST

[Patent Document]

Patent Document 1: JP 6027676 B

Patent Document 2: JP 5637630 B2

SUMMARY OF INVENTION

[Technical Problem]

As a result of repeatedly prototyping and testing a refractory member using the refractory product disclosed in the Patent Document 1, the present inventors have found that further improvements in the corrosion resistance and thermal shock resistance are desired.

That is, it has been found that since the refractory product disclosed in Patent Document 1 contains 40% by mass or more of magnesia (periclase), it exhibits excellent corrosion resistance for a steel grade containing basic inclusions such as CaO or MnO, but is insufficient in corrosion resistance for a steel grade containing acidic inclusions such as $SiO_2$. It has also been found that in the refractory product disclosed in Patent Document 1, a magnesia-carbon reaction (reaction of the below-mentioned formula (1)) occurs during use, and particularly when used repeatedly, the microstructure thereof is changed in quality and increased in the modulus of elasticity, resulting in deterioration of thermal shock resistance.

$$MgO \text{ (solid)} + C \text{ (solid)} \rightarrow Mg \text{ (gas)} + CO \text{ (gas)} \qquad (1)$$

In recent years, it has become often the case that a refractory member for continuous casting, such as a nozzle for continuous casting, is used in a state in which preheating is not sufficient or in a non-preheated state. Thus, further improvement in the thermal shock resistance is desired.

A technical problem to be solved by the present invention is to improve corrosion resistance and thermal shock resistance of a refractory product and a refractory member for continuous casting.

[Solution to Technical Problem]

In view of the above-mentioned disadvantage of containing a large amount of magnesia (periclase), the present inventors decided to limit the content of magnesia (periclase) to less than 40% by mass, and based on this premise, repeatedly performed experimental tests and studies for improving corrosion resistance and thermal shock resistance. As a result, the present inventors have found that it is essential to control the form of pores inside a refractory product, while achieving densification of the refractory product. The present inventors have also found that for that purpose, the particle size composition (volume percent) of refractory particles in the refractory product is one important control factor, and have come to complete the present invention.

The scope of the present invention is defined by independent claim 1, and further embodiments of the invention are specified in dependent claims 2-5.

According to the further embodiment of the present invention, there is provided a refractory member for continuous casting comprising the refractory product for continuous casting, according to the first aspect of the present invention, is disposed in a part or the entirety of an area of the refractory member to be brought into contact with molten steel.

[Advantageous Effects of Invention]

The present invention can improve corrosion resistance and thermal shock resistance of a refractory product and a refractory member for continuous casting. This makes it possible to produce excellent durability even in a usage environment in which a refractory member is used in a non-preheated state.

BRIEF DESCRIPTION OF DRAWINGS

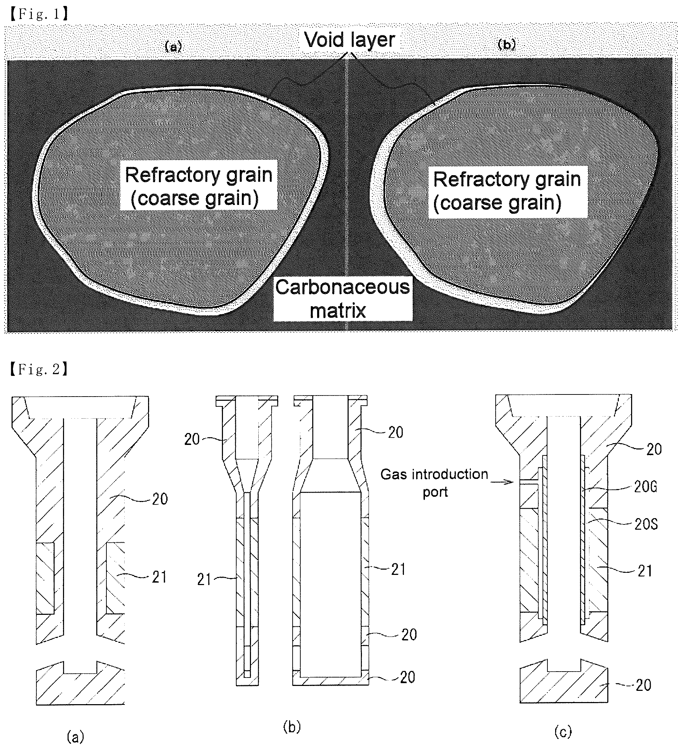

FIG. 1 is a conceptual diagram showing a refractory particle as aggregate, and its surrounding microstructure in a refractory product according to the present invention, wherein: (a) shows an example in which a void layer is formed around the refractory particle to have a shape similar to the outline of the refractory particle, wherein the refractory particle is almost centered (a typical example of the present invention); and (b) shows an example in which a void layer is formed around the refractory particle to have a shape similar to the outline of the refractory particle, wherein the refractory particle is biasedly located on one side of an inner wall of the void layer (an example of an eccentrically located state which is likely to occur when preparing a sample for microscopic observation).

FIG. 2 is a sectional view showing an example of an immersion nozzle as a form of a refractory member to which the refractory product according to the present invention is applied.

FIG. 3 is a sectional view showing another example of the immersion nozzle as a form of the refractory member to which the refractory product according to the present invention is applied.

FIG. 4 is explanatory diagram showing an example of installation of a refractory member for continuous casting, in an example of a facility for continuous casting of steel.

FIG. 5 is a sectional view showing an example of a long nozzle as a form of the refractory member to which the refractory product according to the present invention is applied.

FIG. 6 is a sectional view showing an example of a lower nozzle as a form of the refractory member to which the refractory product according to the present invention is applied.

FIG. 7 is a sectional view showing another example of the long nozzle as a form of the refractory member to which the refractory product according to the present invention is applied.

FIG. 8 is a sectional view showing an example of a long stopper as a form of the refractory ember to which the refractory product according to the present invention is applied.

DESCRIPTION OF EMBODIMENTS

As mentioned above, it is essential for solving the aforementioned technical problem to control the form of pores inside a refractory product, while promoting densification of the refractory product. Therefore, the present inventors aspired to a refractory microstructure in which refractory particles having a particle size of greater than 0.3 mm and serving as aggregate are present, independently in a non-continuous manner, in a three-dimensionally continuous, carbon-containing, matrix microstructure (hereinafter referred to as "carbonaceous matrix"), and an approximately continuous void layer is present around each of a plurality of coarse particles at least one of which has the largest particle size among the refractory particles, wherein the approximately continuous void layer has a similar shape to the coarse particle. That is, such a refractory microstructure makes it possible to obtain an effect of allowing thermal expansion of the coarse particle, which contributes largely to thermal expansion of the refractory product, to be absorbed by the approximately continuous void layer around the coarse particle, and consequently allowing the thermal expansion of the coarse particle to apparently disappear. That is, as long as the void layer is present around each coarse particle during the course of heat receiving, the amount of thermal expansion of the refractory product consists mainly of the amount of thermal expansion of the three-dimensionally continuous carbonaceous matrix, so that it becomes possible to lower the thermal expansion of the refractory product.

Further, in the present invention, the respective volume percents of refractory particles having a particle size of greater than 0.3 mm (hereinafter referred to as "coarse-fraction refractory particles") and refractory particles having a particle size of 0.045 mm or less (hereinafter referred to as "fine-fraction refractory particles") are limited so as to realize control of the form of pores inside the refractory product as described above, while promoting densification of the refractory product, thereby realizing improvements in corrosion resistance and thermal shock resistance of the refractory product and the refractory member for continuous casting. The following is a more detailed description.

The refractory product according to the present invention contains a free carbon component in an amount of 10% by mass to 30% by mass. Here, the term "free carbon component" means a carbon component composed of a simple carbon component excluding unavoidable impurities, other than a compound including a carbide such as $B_4C$ or SiC, and means any carbon component present in a refractory microstructure, formed when any of various types of organic binders, pitch, tar, or carbon black receives heat, wherein the carbon component may be amorphous or may be crystalline such as graphite, or may have any shape and structure, e.g., may be present in a refractory microstructure in granular form (including fibrous form) or in continuous or discontinuous state without having a specific shape.

If the content of the free carbon component is less than 10% by mass, a three-dimensionally continuous carbonaceous matrix is not formed in the refractory microstructure, and a sufficient expansion lowering effect cannot be obtained. On the other hand, if the content of the free carbon component exceeds 30% by mass, damage to the carbonaceous matrix due to molten steel, slag, etc., becomes severe, and the amount of wear loss of the refractory product increases, leading to deterioration in corrosion resistance. In addition, when graphite or the like is used in a large amount as a free carbon component source, formability is deteriorated, and denseness of the refractory product is impaired. This also leads to deterioration in corrosion resistance. The content of the free carbon component is preferably 15% by mass to 25% by mass.

The main mineral phase of the refractory product according to the present invention is comprised of one or more selected from the group consisting of corundum, spinel, and periclase. However, the content of the periclase is limited to less than 40% by mass. This is because if the content of the periclase (magnesia) is 40% by mass or more, the aforementioned disadvantage will occur. The content of the periclase is preferably 35% by mass or less.

Here, as used in the present invention, the term "main mineral phase" means the most abundant mineral phase among the mineral phases in the refractory product, and when there are two or more kinds of the most abundant mineral phases, each of them is defined as the main mineral phase. Further, when some refractory particles contain a plurality of kinds of mineral phases, each of the plurality of kinds of mineral phases contained in a respective one of the refractory particles is added to the same kind of mineral phase contained in the other refractory particles, thereby determining the "main mineral phase".

In the refractory product according to the present invention, the content of a silica component and a silicon carbide component is limited to less than 15% by mass in total. This is because if the content of the silica component and the silicon carbide component is 15% by mass or more in total, deterioration in corrosion resistance becomes prominent. Since the silicon carbide component has a function of suppressing oxidation of the free carbon component, etc., it may be appropriately contained within the range of less than 15% by mass, and as long as the content thereof is, e.g., 5% by mass or less, it is possible to produce the oxidation suppression function without substantially deteriorating corrosion resistance.

Next, a particle size composition (volume percent) of refractory particles in the refractory product, which is one feature of the present invention, will be described.

In the present invention, the particle size composition (volume percent) of the refractory particles in the refractory product is characterized in that, when a remainder after excluding a composition comprised of the free carbon component from a composition of the refractory product is defined as 100% by volume, the coarse-fraction refractory particles account for 20 % by volume or more, and the fine-fraction refractory particles account for 3% by volume to 30% by volume.

If the coarse-fraction refractory particles account for less than 20 % by volume, the volume percent of the fine-fraction refractory particles or a below-mentioned medium-fraction refractory particles relatively increases, and thus the number of refractory particles in the refractory product increases. This results in a refractory microstructure in which refractory particles are present continuously, leading to a high expansion property. Thus, thermal shock resistance is deteriorated. The upper limit of the volume percent of the coarse-fraction refractory particles is not particularly limited, but from a viewpoint of stably ensuring required properties such as strength and corrosion resistance required as a refractory product for continuous casting, for example, it may be set to, e.g., 60% by volume or less. The volume percent of the coarse-fraction refractory particles is preferably 30% by volume or more, more preferably 40% by volume to 60% by volume. The upper limit of the particle size of the coarse-fraction refractory particles is also not particularly limited, but from the viewpoint of stably ensuring required properties such as strength and corrosion resistance required as a refractory product for continuous casting, it is preferably 3 mm or less, more preferably 1 mm or less. More specifically, in addition to refractory particles having a particle size of greater than 0.3 mm to 1 mm, the refractory product according to the present invention may include refractory particles having a particle size of greater than 1 mm to 3 mm, as the coarse-fraction refractory particles. However, when a remainder t after excluding a composition comprised of the free carbon component from a composition of the refractory product is defined as 100% by volume, the volume percent of the refractory particles having a particle size of greater than 1 mm to 3 mm is preferably 15% by volume or less, more preferably 0% by volume, i.e., it is more preferable that the refractory product does not contain the refractory particles having a particle size of greater than 1 mm to 3 mm.

Further, if the volume percent of the fine-fraction refractory particles is less than 3% by volume, a dense refractory cannot be obtained, leading to deterioration in corrosion resistance. On the other hand, if the volume percent of the fine-fraction refractory particles exceeds 30% by volume, the number of refractory particles in the refractory product increases. This results in a refractory microstructure in which refractory particles are present continuously, leading to a high expansion property. Thus, thermal shock resistance is deteriorated. The volume percent of the fine-fraction refractory particles is preferably 5 by volume to 15 by volume. In the refractory product according to the present invention, the fine-fraction refractory particles are basically present in the carbonaceous matrix.

The above description has been made about the respective volume percents of the coarse-fraction (particle size: greater than 0.3 mm) refractory particles and the fine-fraction (particle size: 0.045 mm or less) refractory particles. The refractory product according to the present invention appropriately includes medium-fraction (particle size: greater than 0.045 mm to 0.3 mm) refractory particles. When a remainder after excluding a composition comprised of the free carbon component from a composition of the refractory product is defined as 100% by volume, the volume percent of the medium-fraction refractory particles is a remainder other than the volume percent of the coarse-fraction refractory particles and the volume percent of the fine-fraction refractory particles, and is preferably 10% by volume to 77% by volume, more preferably 30% by volume to 70% by volume.

Here, as used in the present invention, the term "particle size of refractory particles" is the size of a sieve mesh when refractory particles are sieved and separated. For example, refractory particles having a particle size of 0.045 mm or less mean refractory particles capable of passing through a sieve having a mesh size of 0.045 mm, and refractory particles having a particle size of greater than 0.3 mm mean refractory particles incapable of passing through a sieve having a mesh size of 0.3 mm.

Next, the microstructure of the refractory product according to the present invention will be described in detail. The basic configuration of the microstructure of the refractory product according to the present invention is a refractory microstructure in which refractory particles having a particle size of greater than 0.3 mm and serving as aggregate are present independently in a non-contiguous manner, in a three-dimensionally continuous carbonaceous matrix, and an approximately continuous void layer is present around each of a plurality of coarse particles at least one of which has the largest particle size among the refractory particles, wherein the approximately continuous void layer has a similar shape to the coarse particle, as described above. Specifically, it is a refractory microstructure in which a total thickness of the approximately continuous void layer across two positions on an interface between the carbonaceous matrix and the coarse particle, located on opposed sides of the void layer is in the range of 0.3% to 3% of the particle size of the coarse particle.

Here, the term "substantially continuous void layer" means a void layer which has an outline enlarged substantially similarly with respect to the outline of the cross-sectional shape of the refractory particle as aggregate, in cross-sectional observation of the refractory particles by a microscope, and defines therein a void in which the refractory particle is present (see FIG. 1 (a)) like a bell's ball. That is, the term does not mean a configuration in which a composition of carbon or the like which hinders thermal expansion of the refractory particle is present inside the void layer, and that areas where two or more refractory particles or a refractory particle and the carbonaceous matrix are in direct contact with each other are randomly present due to unevenness of the void layer or the absence of void.

It should be noted that, in the refractory product according to the present invention, there is a void layer around the entire periphery of each refractory particle as aggregate, i.e., in "a continuous state". However, when it is attempted to verify such a state by microscopic observation, since the refractory particle is present in such a state in which it floats in the void space without being fixed, a part of the surface of the refractory particle is likely to come into contact with surrounding another refractory particle or the carbonaceous matrix (see FIG. 1 (b)). Therefore, the term "approximately continuous" is used in consideration of the actual state in verification. The void layer is actually present around the entire periphery of each refractory particle, but a part of the surface of the refractory particle is likely to be in contact with another refractory particle or the carbonaceous matrix during verification in the form of a microscopic observation sample. However, such a contact area is not in a "coupled or bonded" state to an extent that the refractory particle is fixed. That is, the thermal expansion of the refractory particle is absorbed by such a "substantially continuous void layer", which makes it possible to lower expansion of the refractory product.

From a viewpoint of reducing the amount of thermal expansion of the refractory product, it is preferable that the thickness of the void layer around each refractory particle is set as large as possible, and the void layer is present around each of all refractory particles as aggregate. However, since the void layer around each refractory particle causes deterioration in strength of the refractory product, it is necessary to adjust the thickness of the void layer while taking a balance between the amount of thermal expansion, and the strength, damage or the like.

With regard to the ratio of the thickness of the void layer to the particle size (void layer thickness ratio per particle:

MS value (microspace value)), the MS value becomes smaller as the particle size becomes larger, and becomes larger as the particle size becomes smaller. Thus, specifying the MS value of a coarse particle having the largest particle size among all the refractory particles is equivalent to specifying the lower limit of the void layer thickness ratio per particle in the refractory microstructure, so that it allows thermal shock resistance of the refractory product to be roughly evaluated.

Here, the term "MS value" is the ratio of the void layer thickness L between a coarse particle and a carbonaceous matrix (where L is the sum of void layer thicknesses on opposite sides of the particle) to the diameter D of the coarse particle, and is calculated by the following formula:

$$\text{MS value} = (L \,/\, D) \times 100 \ (\%)$$

Specifically, the MS value (%) in the present invention is calculated in the following manner.

Through microscopic microstructure observation of a refractory product, ten coarse particles are selected in descending order of particle size, and after drawing the largest circle inscribing the contour (outline) of each of the selected particles, within the plane of the particle, an arbitrary line passing through the center of the circle is drawn. Further, three lines passing through the center of the circle are drawn at a 45-degree pitch using the above arbitrary line as a reference line. That is, total four lines are drawn per particle. Then, a length (D1, D2, D3, D4) between two contour points of the particle located at opposite ends of each of the four lines is measured, and further the sum (L1, L2, L3, L4) of two thicknesses of a void layer lying in an interface between the particle and the carbonaceous matrix, on the opposite end sides of each of the lines, is measured. Then, MS1, MS2, MS3 and MS4 are calculated by the above formula using the values obtained using the four lines, and an average of the values is calculated as the void layer thickness ratio per particle, i.e., MS value. Respective MS values of the preliminarily selected ten coarse particles are calculated in the above-mentioned manner, and averaged to obtain an MS value of the refractory microstructure.

The reason that an MS value of the refractory microstructure is evaluated by the coarse particles having the largest particle size, i.e., the ten coarse particles selected in descending order of particle size in microscopic microstructure observation of the refractory product is that as the particle size of the particle becomes larger, a change in the volume or length thereof due to thermal expansion becomes larger, and the influence on thermal shock resistance becomes larger. Thus, the MS value serving as an index for adjusting and evaluating thermal shock resistance needs to be calculated based on the coarse particle having the largest particle size in the refractory microstructure. Further, from a similar viewpoint, the above "approximately continuous void layer" in the present invention needs to be present around each of the coarse particles at least one of which has the largest particle size, i.e., around each of the ten coarse particles selected in descending order of particle size in microscopic microstructure observation of the refractory product.

The present inventors have confirmed that in a refractory product in which a main mineral phase is comprised of one or more selected from the group consisting of corundum, spinel, and periclase, wherein the content of the periclase is less than 40% by mass, the thickness of the void layer around each refractory particle, which has the expansion lowering effect and achieves a good balance in terms of strength, corrosion resistance, and abrasion resistance, is 0.3% to 3.0% in terms of the MS value calculated based on the coarse particles at least one of which has the largest particle size. That is, if the MS value is less than 0.3%, a sufficient expansion lowering effect cannot be obtained. On the other hand, if the MS value exceeds 3.0%, the strength is deteriorated, and the corrosion resistance and the abrasion resistance are also deteriorated. As above, the present invention can significantly improve thermal shock resistance, and provide a refractory product achieving a good balance in terms of strength, corrosion resistance, and abrasion resistance, by forming a refractory microstructure such that an approximately continuous void layer is present around each of a plurality of coarse particles at least one of which has the largest particle size among refractory particles in a refractory product, the approximately continuous void layer having a similar shape to the coarse particle, wherein the total thickness of the substantially continuous void layer across two positions on an interface between a carbon-containing matrix microstructure and the coarse particle located on opposite sides of the void layer is 0.3% to 3.0% of the particle size of the coarse particle.

A control method for such an MS value, i.e., a method of: forming an approximately continuous void layer around each of a plurality of coarse particles at least one of which has the largest particle size among refractory particles in the refractory product, wherein the approximately continuous void layer has a similar shape to the coarse particle; and controlling the thickness of the void layer, is, for example, as follows.

The control of the MS value is synonymous with control of thermal expansion rate. Specifically, a larger refractory particle (coarser particle) has a larger amount of thermal expansion in the course of heat treatment, and a difference in thermal expansion between the refractory particle and the carbonaceous matrix becomes prominent. Thus, around such a coarse particle, an approximately void continuous layer (hereinafter also referred to as "MS") having a similar shape to the coarse particle more likely to be formed. On the other hand, since a smaller refractory particle has a smaller amount of thermal expansion, a clear MS is less likely to be formed therearound. Therefore, the control of the MS value, i.e., the control of thermal expansion rate, becomes possible by controlling the particle size composition (volume percent) of the refractory particles in the refractory product. In the present invention, lower expansion and control thereof can be achieved by, when a remainder after excluding a composition comprised of the free carbon component is defined as 100% by volume, setting the refractory particles having a particle size of greater than 0.3 mm to account for 20% by volume or more, and setting the refractory particles having a particle size of 0.045 mm or less to account for 3% by volume to 30% by volumes. For example, when lower expansion is desired, the volume percent of the refractory particles having a particle size of 0.045 mm or less may be reduced within the above range of the particle size composition (volume percent) to cut off the continuity of the refractory particles in the refractory microstructure, and the volume percent of the refractory particles having a particle size of greater than 0.3 mm may be increased to promote the formation of the MS.

The refractory product according to the present invention combines the above features (the chemical composition, main mineral phase, particle size composition (volume percent) of refractory particles, and refractory microstructure), whereby it is possible to achieve both denseness expressed by an apparent porosity of 16% or less, and low expansion property expressed by the maximum thermal expansion rate up to 1500°C of 0.6% or less. Thus, it is possible to improve corrosion resistance and thermal shock resistance of a refractory product and a refractory member for continuous casting, and allow the refractory product and the refractory member to produce excellent durability even in a usage environment in which they are used in a non-preheated state.

Here, the chemical composition, refractory microstructure, apparent porosity, thermal expansion rate, etc., of the refractory product according to the present invention are basically evaluated based on a sample "after being subjected to heating in a non-oxidizing atmosphere at 1000°C". The reason is to remove components such as water, organic matter, hydrates, and carbonate compounds in the refractory material, and stabilize the chemical composition of the refractory product by carbonization of an organic binder component, thereby promoting improvement in analytical accuracy. From this point of view, a heating duration is set to a period to be continued until there is no change in weight due to the heating. However, in a case where the refractory product has been subjected to a heat treatment at a temperature of 1000°C or more, or to a heat treatment at a temperature of 800°C or more depending on the type of volatile component, in a production process of the refractory product, it is possible to perform evaluations of the chemical composition, refractory microstructure, apparent porosity, thermal expansion rate, etc., in a product state after the production.

Preferably, the refractory product according to the present invention contains a boron component in an amount of 0.1% by mass to 3.0% by mass in terms of $B_2O_3$ equivalent. The boron component generates fibrous borate alumina or the like in the carbonaceous matrix during heating of the refractory product. This promotes densification and reinforcement of the carbonaceous matrix, and improvement in strength of the refractory product.

The refractory product according to the present invention may contain carbon fibers in the carbonaceous matrix. The carbon fibers fill a defective part such as a crack which occurs with contraction of the carbonaceous matrix due to carbonization of an organic binder component, etc., during heating of the refractory product. This promotes densification and reinforcement of the carbonaceous matrix, and improvement in strength of the refractory product. From a viewpoint of sufficiently producing such an effect of improving the strength of the refractory product, the aspect ratio of the carbon fibers is preferably 15 to 200, and the content of the carbon fibers is preferably 5% by mass or less.

The refractory product according to the present invention can be produced by a similar method to a production method for a commonly-used refractory product whose main mineral phase is one or more selected from the group consisting of corundum, spinel, and periclase, as with fabrication of samples for the below-mentioned Examples.

For example, the method comprises: adding a binder to a raw material blend comprising refractory particles constituting a main mineral phase; kneading a resulting mixture; adjusting the kneaded mixture to a state suitable for shaping; molding the adjusted mixture by CIP (cold Isostatic Press); subjecting a resulting molded body to drying at a temperature of about 300°C or less; and then subjecting the dried body to heat treatment in a non-oxidizing atmosphere at a temperature of about 800°C to about 1200°C.

Next, a refractory member for continuous casting, using the refractory product according to the present invention, will be described. FIG. 2 shows an immersion nozzle which is one form of the refractory member for continuous casting, in a longitudinal section. FIG. 2(a) shows an example of an immersion nozzle in which the refractory product 20 according to the present invention is disposed in a part of an area of the immersion nozzle to be brought into contact with molten steel, in the form of a single layer having a thickness ranging from a surface to be brought into contact with molten steel to a peripheral surface of the immersion nozzle. In FIG. 2(a), the refractory product 20 according to the present invention may be additionally disposed in an area of a powder line material 21. In this case, an immersion nozzle is provided in which the refractory product according to the present invention is disposed in the entirety of an area of the immersion nozzle to be brought into contact with molten steel, in the form of a single layer having a thickness ranging from a surface to be brought into contact with molten steel to a peripheral surface of the immersion nozzle. A nozzle having a single-layer structure can reduce a risk such as breaking caused by thermal expansion difference between two layers, and enables adopting a simple method for production. In production of such a nozzle having a single-layer structure, based on the aforementioned production method, a mixture for the refractory product according to the present invention may be filled as a single layer in a target area within a CIP molding mold.

FIG. 2(a) shows an example of a cylindrical nozzle. However, a nozzle, such as an immersion nozzle, to which the refractory product according to the present invention is applied, is not limited to such a cylindrical nozzle, but the refractory product according to the present invention may be applied to any other type of nozzle without being limited by shape, i.e., to a nozzle having any of various shapes, such as a flat shape, an elliptical shape, and a funnel shape (funnel shaped with an enlarged-diameter upper portion), which is mainly used for thin-slab casting, as shown in, e.g., FIG. 2(b). FIG. 2(c) shows an example of an immersion nozzle having a function of injecting gas into molten steel from a part of an inner bore section (inner wall) of the immersion nozzle in FIG. 2(a). In this example, a refractory product 20G having high gas permeability (hereinafter referred to as "gas-permeable refractory product") is disposed in a part of the inner bore section. The material of the gas-permeable refractory product 20G may be a commonly-used alumina-graphite gas-permeable refractory material, or may be a material obtained by increasing porosity, gas- permeability, or the like, while maintaining the refractory composition of the present invention. It should be noted that the reference sign 20S in FIG. 2(c) denotes a space serving as a gas passage path, and also serving as a gas accumulation chamber.

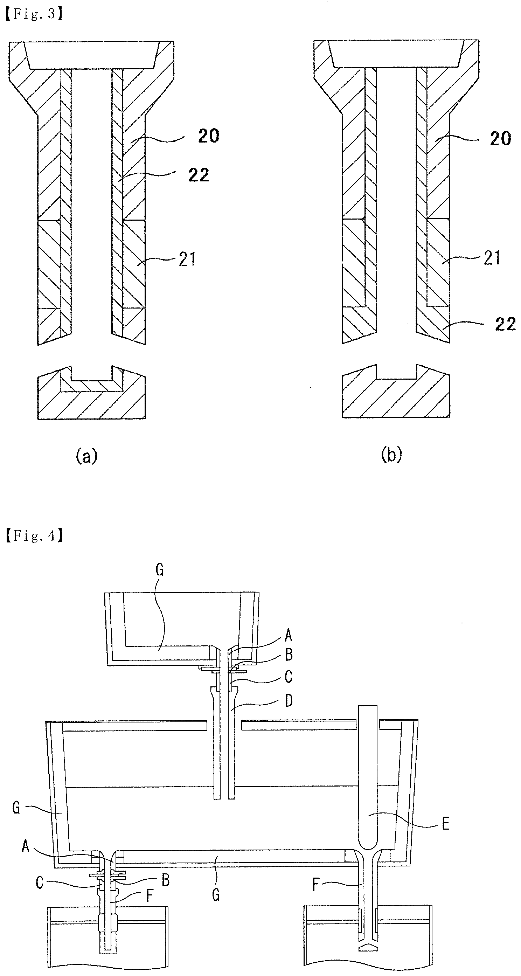

FIG. 3 shows an example of an immersion nozzle in which the refractory product 20 according to the present invention is disposed in a part or the entirety of an area of the immersion nozzle to be brought into contact with molten steel, and a layer composed of a refractory product (hard-to-adhere material 22) having a different composition from that of the refractory product 20 according to the present invention is disposed on the inner side of the refractory product 20 to form a multi-layer, wherein the refractory product 20 and the inner layer are integrated together in a state in which they are in direct contact with each other. In production of such a nozzle composed of a multi-layer, based on the aforementioned production method, after partitioning a target area within a CIP molding mold into two void spaces at a position apart from a surface of the nozzle to be brought in contact with molten steel in a radial direction of the nozzle by a given thickness, a mixture for a refractory product different from the refractory product according to the present invention may be filled in one space on the inner side (core rod side) of the partition, and a mixture for the refractory product according to the present invention, etc., may be filled in the other space on the side of a peripheral surfacer of the nozzle. Subsequently, after removing a jig such as a plate used as the partition, the mixtures may be subjected to pressure molding.

Examples of a nozzle for continuous casting, to which the refractory product according to the present invention can be applied or is suitably applied include a tundish nozzle (including an upper nozzle, and an open nozzle), an intermediate nozzle, and a flow rate control nozzle (in particular, an inner bore), in addition to the immersion nozzle.

FIG. 4 shows a configuration example of a facility of continuous casting of steel, wherein an example is illustrated on the left side of FIG. 4 in which a nozzle unit as a molten steel flow path when discharging molten steel from a molten steel vessel is composed of a plurality of nozzles, wherein an immersion nozzle F among the plurality of nozzles is an externally mounted type. The refractory product 20 according to the present invention can be applied not only to the immersion nozzle F but also to any of various nozzles such as an upper nozzle A, a sliding nozzle plate B, a lower nozzle C, and a long nozzle D in the structure composed of a plurality of continuous casting nozzles, wherein it may be disposed in a part or the entirety of an area of the nozzle to be brought into contact with molten steel. It can also be applied to a so-called "insertion type immersion nozzle" (on the right side of FIG. 4) having a structure in which the nozzle unit as a discharge path is integrated, a so-called "open nozzle" which is not immersed in molten steel, etc. Further, it can be applied to a stopper E which is located above the nozzle unit and configured to control the flow rate of molten steel or to open and close the discharge path, or a refractory liner G of a molten steel vessel.

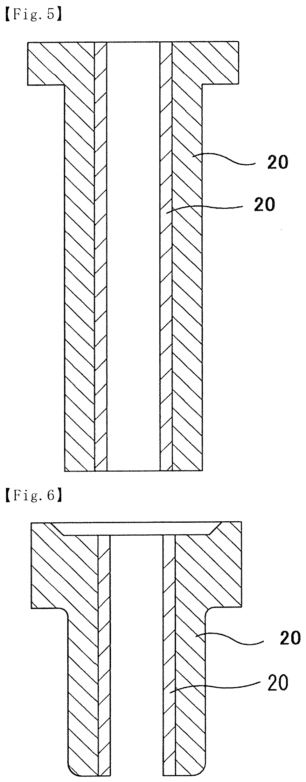

FIGS. 5 and 6 show examples of a long nozzle and a lower nozzle each having an area to be brought into contact with molten steel, wherein the refractory product 20 according to the present invention is disposed in a part or the entirety of the area. In FIGS. 5 and 6, either one or both of a refractory layer on the inner side of the nozzle and a refractory layer on the peripheral side of the nozzle may be composed of the refractory product 20 according to the present invention.

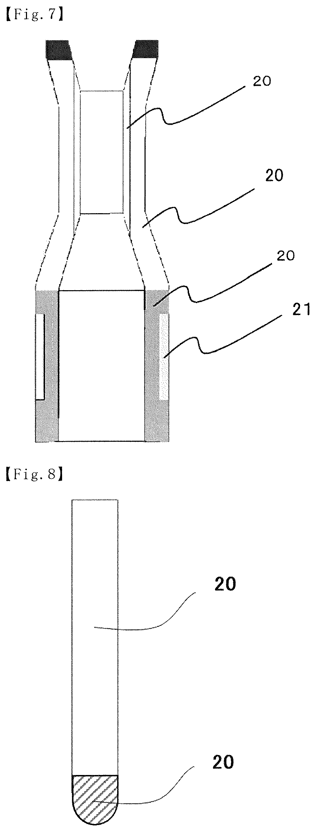

FIG. 7 shows an example of a long nozzle composed of the refractory product 20 according to the present invention, except for an area of the powder line material 21. In FIG. 7, the refractory product 20 according to the present invention may also be disposed in the area of the powder line material 21.

FIG. 8 shows an example of a long stopper having an area to be brought into contact with molten steel, wherein the refractory product 20 according to the present invention is disposed in a part or the entirety of the area. In FIG. 8, either one or both of a distal end portion and a base end portion other than the distal end portion of the long stopper may be composed of the refractory product 20 according to the present invention.

EXAMPLES

The following Tables 1 to 6 show a raw material composition and evaluation results of each of Inventive Examples and Comparative Examples. Although the "volume percent of the refractory particles" in each Table is a volume percent calculated based on the raw material composition, this volume percent will be maintained in a resulting refractory product. That is, the "volume percent of the refractory particles" shown in each Table is the same as the volume percent of refractory particles in each particle size fraction when a remainder after excluding a composition comprised of the free carbon component from a composition of the refractory product is defined as 100% by volume. Further, although the "mineral phase" in each Table are shown as a refractory raw material in the raw material composition, such a mineral phase constituting the refractory raw material will be maintained in the resulting refractory product. Further, the "additive" in each Table is a boron component source, and an addition amount thereof is shown as an addition amount with respect to and in addition to 100% by mass of the raw material composition which does not include the "additive".

A phenol resin as an organic binder was added to the raw material formulation in each example shown in each Table, and a resulting mixture was kneaded and adjusted to a state suitable for molding. The adjusted mixture was molded by cold isostatic pressing (CIP), and then subjected to curing and drying at temperatures of up to 300°C, and then to heat treatment in a non-oxidizing atmosphere at 1000°C, thereby obtaining a refractory product in each example.

The obtained refractory product was subjected to analysis of chemical composition, observation of microstructural states, and an evaluation test.

The analysis of chemical composition was performed by a method based on JIS R2216.

In the observation of microstructural states, after impregnating the refractory microstructure of the refractory product with a resin, and forming a mirror-finished surface by mechanical polishing, through microscope observation, an MS value was obtained by the aforementioned method, and the continuity of a void layer was observed.

As the evaluation of the refractory product, apparent porosity, maximum thermal expansion rate at a temperature up to 1500°C, corrosion resistance, and thermal shock resistance were evaluated, and based on the results of these evaluations, the refractory product was comprehensively evaluated.

The apparent porosity was measured by a method based on JIS R2205.

The thermal expansion rate was measured at a temperature up to 1500°C by a method based on JIS R2207-3, to evaluate the maximum thermal expansion rate at a temperature up to 1500°C.

The corrosion resistance was evaluated by a method comprising: immersing a prism-shaped sample ($20\times20\times180$ mm) of the refractory product in each example, in a crucible in which synthetic slag with a $CaO/SiO_2$ mass ratio adjusted to 1.0 floated on a surface of low-carbon steel melted at 1550°C, to have a thickness of about 30 mm, for 60 min; pulling up the sample; then measuring the amount of wear loss at a position of a molten steel-molten slag interface; and comparing the measured amount with a reference value. Specifically, the amount of wear loss of the refractory product in each example was converted into a wear loss index to be determined on the basis of the amount of wear loss in Comparative Example 2 taken as 100, and when a sample had a wear loss index of less than 100, the sample was evaluated to have an effect of solving the technical problem. More specifically, a sample having a wear loss index of 90 or less, a sample having a wear loss index of greater than 90 to less than 100, and a sample having a wear loss index of greater than 100, were evaluated, respectively, as o (excellent), $\Delta$ (Good), and $\times$ (NG).

The evaluation of thermal shock resistance was performed through a test in which thermal shock is applied to a tubular sample refractory product (outer diameter/inner diameter (inner bore diameter)/height = 130/55/300 mm) by a method configured to pour molten iron at 1600°C into an inner bore of the sample at room temperature. After the test, the sample was cut along a horizontal cross-section with a pitch of 50 mm to check the presence or absence of a crack. A sample in which no crack was observed, a sample in which a microcrack was observed, and a sample in which a crack was observed, were evaluated, respectively, as o (excellent), $\Delta$ (Good), and $\times$ (NG).

In the comprehensible evaluation, a sample in which: with regard to microstructure states, the MS value was within the scope of the present invention (0.3% to 3%), and the continuity of the void layer was approximately continuous; the apparent porosity was within the scope of the present invention (16% or less); the maximum thermal expansion rate at a temperature up to 1500°C was within the scope of the present invention (0.6% or less); the evaluation of corrosion resistance was $\circ$; and the evaluation of thermal shock resistance was $\circ$, a sample in which: with regard to microstructure states, the MS value was within the scope of the present invention (0.3% to 3%), and the continuity of the void layer was approximately continuous; the apparent porosity was within the scope of the present invention (16% or less); the maximum thermal expansion rate at a temperature up to 1500°C was within the scope of the present invention (0.6% or less); and the evaluation of one of corrosion resistance and thermal shock resistance was $\Delta$, and a sample in which: with regard to microstructure states, the continuity of the void layer was partially continuous; the apparent porosity was greater than 16%; the maximum thermal expansion rate at a temperature up to 1500°C was greater than 0.6%; the evaluation of corrosion resistance was $\times$; or the evaluation of thermal shock resistance was $\times$, were comprehensively evaluated, respectively, as o (excellent), $\Delta$ (Good), and $\times$ (NG).

[TABLE 1]

| | | | | Comparative Example 1 | Inventive Example 1 | Inventive Example 2 | Inventive Example 3 | Inventive Example 4 | Inventive Example 5 | Comparative Example 2 |
|---|---|---|---|---|---|---|---|---|---|---|
| Volume Percent of Refractory Particles /volume% | | Coarse fraction | Greater than 1mm to 3mm | | | | | | | |
| | | | Greater than 0.3mm to 1mm | 40 | 40 | 40 | 40 | 40 | 40 | 40 |
| | | Fine fraction | 0.045mm or less | 10 | 10 | 10 | 10 | 10 | 10 | 10 |
| | | Medium fraction | Greater than 0.045mm to 0.3mm | 50 | 50 | 50 | 50 | 50 | 50 | 50 |
| Raw Material Composition | Mineral Phase (Refractory Raw Material)/mass% | Corundum raw material | | 88,6 | 86,5 | 81,4 | 76,2 | 71,0 | 65,8 | 60,6 |
| | | Silicon carbide raw material | | 5,0 | 5,0 | 5,0 | 5,0 | 5,0 | 5,0 | 5,0 |
| | Carbon Raw Materia/mass% | Graphite | | 4,4 | 6,5 | 11,6 | 16,8 | 22,0 | 27,2 | 32,4 |
| | | Carbon fiber | | 2,0 | 2,0 | 2,0 | 2,0 | 2,0 | 2,0 | 2,0 |
| | Additive/mass% (with respect to and in addition to 100 mass%) | Boron oxide | | 2 | 2 | 2 | 2 | 2 | 2 | 2 |
| Binder/mass% (with respect to and in addition to100 mass%) | | Phenol resin | | 3,8 | 3,8 | 4,0 | 4,0 | 4,0 | 4,0 | 4,0 |
| Chemical Component of Refractor Product/mass% | | FC | | 8,0 | 10,0 | 15,0 | 20,0 | 25,0 | 30,0 | 35,0 |
| | | $Al_2O_3$ | | 85,3 | 83,3 | 78,3 | 73,3 | 68,3 | 63,3 | 58,3 |
| | | $B_2O_3$ | | 1,9 | 1,9 | 1,9 | 1,9 | 1,9 | 1,9 | 1,9 |
| | | Total of $SiO_2$, SiC | | 4,8 | 4,8 | 4,8 | 4,8 | 4,8 | 4,8 | 4,8 |
| Microstructural State | | MS value/% | | — | 0,30 | 0,60 | 1,00 | 1,30 | 1,80 | 2,00 |
| | | Continuity of void layer | | partially continuous | approximately continuous | approximately continuous | approximately continuous | approximately continuous | approximately continuous | approximately continuous |
| Apparent Porosity/% | | | | 12,0 | 11,0 | 12,0 | 13,5 | 15,0 | 16,0 | 18,0 |
| Maximum Thermal Expansion Rate at Temperature up to 1500°C | | | | 0,67 | 0,60 | 0,52 | 0,45 | 0,38 | 0,35 | 0,31 |
| Corrosion Resistance | | | | O | Δ | O | O | O | Δ | × |
| Thermal Shock Resistance | | | | × | Δ | O | O | O | O | O |
| Comprehensive Evaluation | | | | × | Δ | O | O | O | Δ | × |

In Table 1, Inventive Examples 1 to 5, in which the content of a free carbon component (hereinafter referred to as "FC") in the refractory product is varied, but is within the scope of the present invention, had low apparent porosity and excellent corrosion resistance, and also had excellent thermal shock resistance. Thus, they were comprehensively evaluated as o (excellent) or Δ (good), i.e., had good results. Among them, Inventive Examples 2 to 4, in which the content of FC is in a preferable range of 15% by mass to 25% by mass, were comprehensively evaluated as o (excellent), i.e., had a particularly good result.

In contrast, Comparative Example 1, in which the content of FC is less than the lower limit of the present invention, failed to form a three-dimensionally continuous carbonaceous matrix in the refractory microstructure, so that the continuity of the void layer around the coarse particles was impaired and the void layer became "partially continuous". Thus, a sufficient expansion lowering effect was not obtained, resulting in high expansion and deteriorated thermal shock resistance. On the other hand, Comparative Example 2, in which the content of FC is greater than the upper limit of the present invention, had deteriorated corrosion resistance.

[TABLE 2]

| | | | | Comparative Example 3 | Inventive Example 6 | Inventive Example 7 | Inventive Example 8 | Inventive Example 9 | Comparative Example 4 | Inventive Example 10 | Inventive Example 11 | Inventive Example 3 | Inventive Example 12 | Inventive Example 13 | Comparative Example 5 |
|---|---|---|---|---|---|---|---|---|---|---|---|---|---|---|---|
| Volume Percent of Refractory Particles /volume% | | Coarse fraction | Greater than 1mm to 3mm | | | | 10 | | | | | | | | |
| | | | Greater than 0.3mm to 1mm | 15 | 20 | 30 | 40 | 60 | 40 | 40 | 40 | 40 | 40 | 40 | 40 |
| | | Fine fraction | 0.045mm or less | 10 | 10 | 10 | 10 | 10 | 1 | 3 | 5 | 10 | 15 | 30 | 35 |
| | | Medium fraction | Greater than 0.045mm to 0.3mm | 75 | 70 | 60 | 40 | 30 | 59 | 57 | 55 | 50 | 45 | 30 | 25 |
| Raw Material Composition | Mineral Phase (Refractory Raw Material /mass% | Corundum raw material | | 76,2 | 76,2 | 76,2 | 76,2 | 76,2 | 76,2 | 76,2 | 76,2 | 76,2 | 76,2 | 76,2 | 76,2 |
| | | Silica raw material | | | | | | | | | 5,0 | | | | |
| | | Silicon carbide raw material | | 5,0 | 5,0 | 5,0 | 5,0 | 5,0 | 5,0 | 5,0 | | 5,0 | 5,0 | 5,0 | 5,0 |
| | Carbon Raw Material/mass% | Graphite | | 16,8 | 16,8 | 16,8 | 16,8 | 16,8 | 16,8 | 16,8 | 16,8 | 16,8 | 16,8 | 16,8 | 16,8 |
| | | Carbon fiber | | 2,0 | 2,0 | 2,0 | 2,0 | 2,0 | 2,0 | 2,0 | 2,0 | 2,0 | 2,0 | 2,0 | 2,0 |
| | Additive/mass% (with respect to and in addition to 100 mass%) | Boron oxide | | 2 | 2 | 2 | 2 | 2 | 2 | 2 | 2 | 2 | 2 | 2 | 2 |
| Binder/mass% (with respect to and in addition to100 mass%) | | Phenol resin | | 4,0 | 4,0 | 4,0 | 4,0 | 4,0 | 4,0 | 4,0 | 4,0 | 4,0 | 4,0 | 4,0 | 4,0 |
| Chemical Component of Refractor Product/mass% | | FC | | 20,0 | 20,0 | 20,0 | 20,0 | 20,0 | 20,0 | 20,0 | 20,0 | 20,0 | 20,0 | 20,0 | 20,0 |
| | | $Al_2O_3$ | | 73,3 | 73,3 | 73,3 | 73,3 | 73,3 | 73,3 | 73,3 | 73,3 | 73,3 | 73,3 | 73,3 | 73,3 |
| | | $B_2O_3$ | | 1,9 | 1,9 | 1,9 | 1,9 | 1,9 | 1,9 | 1,9 | 1,9 | 1,9 | 1,9 | 1,9 | 1,9 |
| | | Total of $SiO_2$, SiC | | 4,8 | 4,8 | 4,8 | 4,8 | 4,8 | 4,8 | 4,8 | 4,8 | 4,8 | 4,8 | 4,8 | 4,8 |
| Microstructural State | | MS value/% | | — | 0,3 | 0,7 | 3,00 | 1,5 | 1,9 | 1,8 | 1,4 | 1,00 | 0,8 | 0,4 | — |
| | | Continuity of void layer | | partially continuous | approximately continuous | approximately continuous | approximately continuous | approximately continuous | approximately continuous | approximately continuous | approximately continuous | approximately continuous | approximately continuous | approximately continuous | partially continuous |
| Apparent Porosity/% | | | | 15,5 | 15,0 | 14,0 | 16,0 | 13,0 | 16,7 | 16,0 | 14,0 | 13,5 | 12,8 | 14,9 | 15,8 |
| Maximum Thermal Expansion Rate at Temperature up to 1500°C | | | | 0,65 | 0,60 | 0,50 | 0,30 | 0,36 | 0,32 | 0,33 | 0,40 | 0,45 | 0,48 | 0,59 | 0,64 |
| Corrosion Resistance | | | | Δ | O | O | O | O | × | Δ | O | O | O | O | Δ |
| Thermal Shock Resistance | | | | × | Δ | O | O | O | O | O | O | O | O | Δ | × |
| Comprehensive Evaluation | | | | × | Δ | O | Δ | O | × | Δ | O | O | O | Δ | × |

In Table 2, Inventive Examples 6 to 9, in which the volume percent of coarse-fraction refractory particles is varied, but is within the scope of the present invention, were comprehensively evaluated as o (excellent) or Δ (good), i.e., had good results. Among them, Inventive Example 6, in which the volume percent of coarse-fraction refractory particles is 20% by volume which is the lower limit of the present invention, had a higher expansion property, resulting in being inferior in thermal shock resistance, as compared to Inventive Example 7 in which the volume percent of coarse-fraction refractory particles is 30% by volume. Further, Inventive Example 8, in which the upper limit of the particle sizes of coarse-fraction refractory particles is 3 mm, had a higher apparent porosity, resulting in being inferior in corrosion resistance, as compared to Inventive Example 9 in which the upper limit of the particle sizes of coarse-fraction refractory particles is 1 mm.

On the other hand, Comparative Example 3, in which the volume percent of coarse-fraction refractory particles is less than the lower limit of the present invention, had a refractory microstructure in which refractory particles are present continuously, as a result of an increase in the number of refractory particles in the refractory product. This resulted in high expansion and deteriorated thermal shock resistance.

Similarly, in Table 2, Inventive Examples 10, 11, 3, 12, and 13, in which the volume percent of fine-fraction refractory particles is varied, but is within the scope of the present invention, were comprehensively evaluated as o (excellent) or Δ (good), i.e., had good results. Among them, Inventive Examples 11, 3, and 12, in which the volume percent of fine-fraction refractory particles is in a preferable range of 5% by volume to 15% by volume, were comprehensively evaluated as o (excellent), i.e., had particularly good results.

In contrast, Comparative Example 4, in which the volume percent of fine-fraction refractory particles is less than the lower limit of the present invention, failed to obtain a dense refractory product, resulting in deteriorated corrosion resistance. On the other hand, Comparative Example 5, in which the volume percent of fine-fraction refractory particles is greater than the upper limit of the present invention, had a refractory microstructure in which refractory particles are present continuously, as a result of an increase in the number of refractory particles in the refractory product. This resulted in high expansion and deteriorated thermal shock resistance.

[TABLE 3]

| | | | Inventive Example 3 | Inventive Example 14 | Inventive Example 15 | Inventive Example 16 | Inventive Example 17 | Inventive Example 18 | Comparative Example 6 | Inventive Example 19 | Inventive Example 20 | Inventive Example 21 | Comparative Example 7 | Inventive Example 22 | Comparative Example 8 |
|---|---|---|---|---|---|---|---|---|---|---|---|---|---|---|---|
| Volume Percent of Refractory Particles /volume% | Coarse fraction | Greater than 1mm to 3mm | | | | | | | | | | | | | |
| | | Greater than 0.3mm to 1mm | 40 | 40 | 40 | 40 | 40 | 40 | 40 | 40 | 40 | 40 | 40 | 40 | 40 |
| | Fine fraction | 0.045mm or less | 10 | 10 | 10 | 10 | 10 | 10 | 10 | 10 | 10 | 10 | 10 | 10 | 10 |
| | Medium fraction | Greater than 0.045mm to 0.3m | 50 | 50 | 50 | 50 | 50 | 50 | 50 | 50 | 50 | 50 | 50 | 50 | 50 |
| Raw Material Composition | Mineral Phase (Refractory Raw Material /mass%) | Corundum raw material | 76,2 | | 38,1 | | 25,4 | 36,3 | 31,2 | 40,0 | | 11,2 | | 39,2 | 26,2 |
| | | Spinel raw material | | 76,2 | 38,1 | 50,0 | 25,4 | | | | | | | | |
| | | Periclase raw material | | | | 26,2 | 25,4 | 39,9 | 45,0 | | | | | | |
| | | Zirconia raw material | | | | | | | | 36,2 | | | | | |
| | | Alumina-zirconia raw material | | | | | | | | | 76,2 | | | | |
| | | Zirconia-mullite raw material | | | | | | | | | | 65,0 | 76,2 | | |
| | | Mullite raw material | | | | | | | | | | | | 37,0 | 50,0 |
| | | Silicon carbide raw material | 5,0 | 5,0 | 5,0 | 5,0 | 5,0 | 5,0 | 5,0 | 5,0 | 5,0 | 5,0 | 5,0 | 5,0 | 5,0 |
| | Carbon Raw Material/mass% | Graphite | 16,8 | 16,8 | 16,8 | 16,8 | 16,8 | 16,8 | 16,8 | 16,8 | 16,8 | 16,8 | 16,8 | 16,8 | 16,8 |
| | | Carbon fiber | 2,0 | 2,0 | 2,0 | 2,0 | 2,0 | 2,0 | 2,0 | 2,0 | 2,0 | 2,0 | 2,0 | 2,0 | 2,0 |
| | Additive/mass% (with respect to and in addition to 100 mass%) | Boron oxide | 2 | 2 | 2 | 2 | 2 | 2 | 2 | 2 | 2 | 2 | 2 | 2 | 2 |
| Binder/mass% (with respect to and in addition to 100 mass%) | | Phenol resin | 4,0 | 4,0 | 4,0 | 4,0 | 4,0 | 4,0 | 4,0 | 4,0 | 4,0 | 4,0 | 4,0 | 4,0 | 4,0 |
| Chemical Component of Refractory Product/mass% | | FC | 20,0 | 20,0 | 20,0 | 20,0 | 20,0 | 20,0 | 20,0 | 20,0 | 20,0 | 20,0 | 20,0 | 20,0 | 20,0 |
| | | $Al_2O_3$ | 73,3 | 52,5 | 62,9 | 34,5 | 41,9 | 34,9 | 30,0 | 38,5 | 44,0 | 32,6 | 25,6 | 63,2 | 59,7 |
| | | MgO | | 20,7 | 10,4 | 38,8 | 31,3 | 38,4 | 43,3 | | | | | | |
| | | $ZrO_2$ | | | | | | | | 34,8 | 29,3 | 31,3 | 36,6 | 0,0 | 0,0 |
| | | $B_2O_3$ | 1,9 | 1,9 | 1,9 | 1,9 | 1,9 | 1,9 | 1,9 | 1,9 | 1,9 | 1,9 | 1,9 | 1,9 | 1,9 |
| | | Total of $SiO_2$, SiC | 4,8 | 4,8 | 4,8 | 4,8 | 4,8 | 4,8 | 4,8 | 4,8 | 4,8 | 14,2 | 15,8 | 14,8 | 18,4 |
| Microstructural State | | MS value/% | 1,00 | 1,05 | 1,00 | 1,50 | 1,30 | 1,50 | 1,60 | 1,10 | 1,10 | 1,10 | 1,10 | 1,00 | 1,00 |
| | | Continuity of void layer | approximately continuous | approximately continuous | approximately continuous | approximately continuous | approximately continuous | approximately continuous | approximately continuous | approximately continuous | approximately continuous | approximately continuous | approximately continuous | approximately continuous | approximately continuous |
| Apparent Porosity/% | | | 13,5 | 12,8 | 13,2 | 14,2 | 13,5 | 14,0 | 14,5 | 13,0 | 13,5 | 13,8 | 14,0 | 15,0 | 15,5 |
| Maximum Thermal Expansion Rate at Temperature up to 1500°C | | | 0,45 | 0,44 | 0,42 | 0,38 | 0,40 | 0,39 | 0,37 | 0,42 | 0,41 | 0,38 | 0,37 | 0,36 | 0,37 |
| Corrosion Resistance | | | O | O | O | Δ | O | Δ | × | O | O | Δ | × | Δ | × |
| Thermal Shock Resistance | | | O | O | O | O | O | O | O | O | O | O | O | O | O |
| Comprehensive Evaluation | | | O | O | O | Δ | O | Δ | × | O | O | Δ | × | Δ | × |

In Table 3, Inventive Examples 3 and 14-19, in which the main mineral phase is varied, but is within the scope of the present invention, had good results. Among them, in Inventive Example 15, the most abundant mineral phase is two types of mineral phases: corundum and spine, i.e., the main mineral phase is two types of mineral phases: corundum and spine. Further, in Inventive Example 15, the most abundant mineral phase is three types of mineral phases: corundum, spine, and periclase, i.e., the main mineral phase is three types of mineral phases: corundum, spine, and periclase.

On the other hand, Inventive Example 15, in which the main mineral phase is periclase, but the content of the periclase is greater than the upper limit of the present invention, had deteriorated corrosion resistance.

Similarly, in Table 3, Inventive Examples 20 to 22, in which a refractory raw material (refractory particles) comprising a plurality of mineral phases is used, but is within the scope of the present invention, had good results. As the refractory raw material comprising a plurality of mineral phases in Table 3, an alumina-zirconia raw material, a zirconia-mullite raw material, and a mullite raw material were used, wherein the contents of mineral phases in each of the raw materials are as follows.

- Alumina-zirconia raw material: 60% by mass of corundom, and 40% by mass of zirconia
- Zirconia-mullite raw material: 50% by mass of zirconia, 35% by mass of corundum, and 15% by mass of silica
- Mullite raw material: 60% by mass of corundum, and 40% by mass of silica

As mentioned above, when some refractory particles contain a plurality of kinds of mineral phases, each of the plurality of kinds of mineral phases contained in a respective one of the refractory particles is added to the same kind of mineral phase contained in the other refractory particles, thereby determining the "main mineral phase". For example, in Inventive Example 21, in 65% by mass of the zirconia-mullite raw material, corundom is contained in an amount of 65 × 0.35 = 22.75% by mass, and corundom contained in the raw material compound is calculated as 33.95% by mass by adding 22.75% by mass to 11.2% by mass which is the content of corundum in the corundum raw material. It should be noted that although in 65% by mass of the zirconia-mullite raw material, zirconia is contained in an amount of 65 × 0.5 = 32.5% by mass, the content of zirconia in the raw material composition is less than the above total content of corundum, and thus the main mineral phase in Inventive Example 21 is determined as corundum.

On the other hand, in Table 3, the main mineral phase in Comparative Example 7 is zirconia contained in the zirconia-mullite raw material, and thus Comparative Example 7 is outside the scope of the present invention. Further, in Comparative Example 7, the content (total content) of the silica component and the silicon carbide component in the refractory product exceeds the upper limit of the present invention. This resulted in deteriorated corrosion resistance.

The main mineral phase in Comparative Example 8 is corundum and is within the scope of the present invention, but the content (total content) of the silica component and the silicon carbide component in the refractory exceeds the upper limit of the present invention. This resulted in deteriorated corrosion resistance.

[TABLE 4]

| | | | Inventive Example 3 | Inventive Example 23 | Inventive Example 24 | Comparative Example 9 |
|---|---|---|---|---|---|---|
| Volume Percent of Refractory Particles /volume% | Coarse fraction | Greater than 1mm to 3mm | | | | |
| | | Greater than 0.3mm to 1mm | 40 | 40 | 40 | 40 |
| | Fine fraction | 0.045mm or less | 10 | 10 | 10 | 10 |
| | Medium fraction | Greater than 0.045mm to 0.3mm | 50 | 50 | 50 | 50 |
| Raw Material Composition | Mineral Phase (Refractory Raw Material /mass% | Corundum raw material | 76,2 | 66,2 | 66,2 | 64,2 |
| | | Silica raw material | | 10,0 | 15,0 | 12,0 |
| | | Silicon carbide raw material | 5,0 | 5,0 | | 5,0 |
| | Carbon Raw Material/mass% | Graphite | 16,8 | 16,8 | 16,8 | 16,8 |
| | | Carbon fiber | 2,0 | 2,0 | 2,0 | 2,0 |
| | Additive/mass% (with respect to and in addition to 100 mass%) | Boron oxide | 2 | 2 | 2 | 2 |
| Binder/mass% (with respect to and in addition to100 mass%) | | Phenol resin | 4,0 | 4,0 | 4,0 | 4,0 |
| Chemical Component of Refractor Product/mass% | | FC | 20,0 | 20,0 | 20,0 | 20,0 |
| | | $Al_2O_3$ | 73,3 | 63,7 | 63,7 | 61,7 |
| | | $B_2O_3$ | 1,9 | 1,9 | 1,9 | 1,9 |
| | | Total of $SiO_2$, SiC | 4,8 | 14,4 | 14,4 | 16,3 |
| Microstructural State | | MS value/% | 1,00 | 0,90 | 0,75 | 0,60 |
| | | Continuity of void layer | approximately continuous | approximately continuous | approximately continuous | approximately continuous |
| Apparent Porosity/% | | | 13,5 | 15,0 | 16,0 | 17,0 |
| Maximum Thermal Expansion Rate at Temperature up to 1500°C | | | 0,45 | 0,36 | 0,35 | 0,37 |
| Corrosion Resistance | | | O | △ | △ | × |
| Thermal Shock Resistance | | | O | O | O | O |
| Comprehensive Evaluation | | | O | △ | △ | × |

In Table 4, Inventive Examples 3, 23, and 24, in which the content (total content) of the silica component and the silicon carbide component in the refractory product is varied, but is within the scope of the present invention, were comprehensively evaluated as o (excellent) or △ (good), i.e., had good results. On the other hand, Comparative Example 9, in which content (total content) of the silica component and the silicon carbide component in the refractory product is greater than the upper limit of the present invention, had deteriorated corrosion resistance.

Comparison among Inventive Examples 3, 23, and 24 shows that the content (total content) of the silica component and the silicon carbide component in the refractory product is preferably set to 5% by mass or less, and it is particularly preferable to reduce the content of the silica component.

[TABLE 5]

| | | | Inventive Example 25 | Inventive Example 26 | Inventive Example 3 | Inventive Example 27 | Inventive Example 28 | Inventive Example 29 | Inventive Example 30 | Inventive Example 31 |
|---|---|---|---|---|---|---|---|---|---|---|
| Volume Percent of Refractory Particles /volume% | Coarse fraction | Greater than 1mm to 3mm | | | | | | | | |
| | | Greater than 0.3mm to 1mm | 40 | 40 | 40 | 40 | 40 | 40 | 40 | 40 |
| | Fine fraction | 0.045mm or less | 10 | 10 | 10 | 10 | 10 | 10 | 10 | 10 |
| | Medium fraction | Greater than 0.045mm to 0.3mm | 50 | 50 | 50 | 50 | 50 | 50 | 50 | 50 |
| Raw Material Composition | Mineral Phase (Refractory Raw Material /mass% | Corundum raw material | 76,2 | 76,2 | 76,2 | 76,2 | 76,2 | 76,2 | 76,2 | 76,2 |
| | | Silicon carbide raw material | 5,0 | 5,0 | 5,0 | 5,0 | 5,0 | 5,0 | 5,0 | 5,0 |
| | Carbon Raw Material/mass% | Graphite | 16,8 | 16,8 | 16,8 | 16,8 | 16,8 | 16,8 | 16,8 | 16,8 |
| | | Carbon fiber | 2,0 | 2,0 | 2,0 | 2,0 | 2,0 | 2,0 | 2,0 | 2,0 |
| | Additive/mass% (with respect to and in addition to 100 mass%) | Boron oxide | | 0,1 | 2,0 | | | 1,0 | 3,2 | 5,0 |
| | | Boron carbide | | | | 2,0 | 1,0 | | | |
| | | Borax | | | | | 2,0 | 1,0 | | |
| Binder/mass% (with respect to and in addition to 100 mass%) | Phenol resin | | 4,0 | 4,0 | 4,0 | 4,0 | 4,0 | 4,0 | 4,0 | 4,0 |
| Chemical Component of Refractor Product/mass% | FC | | 20,4 | 20,4 | 20,0 | 19,9 | 20,2 | 19,9 | 19,8 | 19,4 |
| | Al₂O₃ | | 74,7 | 74,6 | 73,3 | 72,9 | 74,2 | 72,8 | 72,4 | 71,2 |
| | B₂O₃ | | | 0,1 | 1,9 | 2,4 | 0,7 | 2,5 | 3,0 | 4,7 |
| | Total of SiO₂, SiC | | 4,9 | 4,9 | 4,8 | 4,8 | 4,9 | 4,8 | 4,8 | 4,7 |
| Microstructural State | MS value/% | | 1,20 | 1,20 | 1,00 | 0,80 | 1,10 | 0,70 | 0,50 | 0,20 |
| | Continuity of void layer | | approximately continuous | approximately continuous | approximately continuous | approximately continuous | approximately continuous | approximately continuous | approximately continuous | approximately continuous |
| Apparent Porosity/% | | | 16,0 | 15,5 | 13,5 | 14,2 | 14,8 | 14,7 | 15,2 | 15,8 |
| Maximum Thermal Expansion Rate at Temperature up to 1500°C | | | 0,40 | 0,41 | 0,45 | 0,48 | 0,42 | 0,49 | 0,55 | 0,58 |
| Corrosion Resistance | | | △ | O | O | O | O | O | O | △ |
| Thermal Shock Resistance | | | O | O | O | O | O | O | O | △ |
| Comprehensive Evaluation | | | △ | O | O | O | O | O | O | △ |

Inventive Examples shown in Table 5, in which the addition amount and the type of the additive are varied, but are within the scope of the present invention, were comprehensively evaluated as o (excellent) or △ (good), i.e., had good results. Among them, Inventive Example 26, 3, and 27 to 30, in which the boron component is contained in an amount of 0.1% by mass to 3.0% by mass in terms of $B_2O_3$ equivalent, were comprehensively evaluated as o (excellent), i.e., had particularly good results.

[TABLE 6]

| | | | Inventive Example 32 | Inventive Example 3 | Inventive Example 33 | Inventive Example 34 | Inventive Example 35 |
|---|---|---|---|---|---|---|---|
| Volume Percent of Refractory Particles /volume% | Coarse fraction | Greater than 1mm to 3mm | | | | | |
| | | Greater than 0.3mm to 1mm | 40 | 40 | 40 | 40 | 40 |
| | Fine fraction | 0.045mm or less | 10 | 10 | 10 | 10 | 10 |
| | Medium fraction | Greater than 0.045mm to 0.3mm | 50 | 50 | 50 | 50 | 50 |
| Raw Material Composition | Mineral Phase (Refractory Raw Material /mass% | Corundum raw material | 76,2 | 76,2 | 76,2 | 76,2 | 76,2 |
| | | Silicon carbide raw material | 5,0 | 5,0 | 5,0 | 5,0 | 5,0 |
| | Carbon Raw Material | Graphite/mass% | 18,8 | 16,8 | 13,8 | 10,8 | 16,8 |
| | | Carbon fiber/mass% | | 2,0 | 5,0 | 8,0 | 2,0 |
| | | Aspect ratio of carbon fiber | − | 50 | 50 | 50 | 210 |
| | Additive/mass% (with respect to and in addition to 100 | Boron oxide | 2 | 2 | 2 | 2 | 2 |
| Binder/mass% (with respect to and in addition to 100 mass%) | Phenol resin | | 4,0 | 4,0 | 4,0 | 4,0 | 4,0 |
| Chemical Component of Refractor Product (mass%) | FC | | 20,0 | 20,0 | 20,0 | 20,0 | 20,0 |
| | Al₂O₃ | | 73,3 | 73,3 | 73,3 | 73,3 | 73,3 |
| | B₂O₃ | | 1,9 | 1,9 | 1,9 | 1,9 | 1,9 |
| | Total of SiO₂, SiC | | 4,8 | 4,8 | 4,8 | 4,8 | 4,8 |
| Microstructural State | MS value/(%) | | 1,10 | 1,00 | 0,80 | 0,70 | 0,60 |
| | Continuity of void layer | | approximately continuous | approximately continuous | approximately continuous | approximately continuous | approximately continuous |
| Apparent Porosity/% | | | 13,0 | 13,5 | 15,0 | 15,8 | 16,0 |
| Maximum Thermal Expansion Rate at Temperature up to 1500°C | | | 0,43 | 0,45 | 0,50 | 0,58 | 0,55 |
| Corrosion Resistance | | | O | O | O | △ | △ |
| Thermal Shock Resistance | | | O | O | O | △ | O |
| Comprehensive Evaluation | | | O | O | O | △ | △ |

Inventive Examples shown in Table 6, which the aspect ratio and content of carbon fibers are varied, but are within the scope of the present invention, were comprehensively evaluated as o (excellent) or △ (good), i.e., had good results.

Among them. Inventive Examples 32, 3, and 33, in which the aspect ratio of the carbon fibers is 15 to 200, and the content thereof is limited to 5% by mass or less, were comprehensively evaluated as o (excellent), i.e., had particularly good results.

LIST OF REFERENCE SIGNS

20: refractory product of present invention
21: powder line material (refractory product on peripheral side)
22: hard-to-adhere material
22G: gas-permeable refractory product
22S: space (gas passage path, gas accumulation chamber)
A: upper nozzle
B: sliding nozzle plate
C: lower nozzle
D: long nozzle
E: long stopper
F: immersion nozzle
G: refractory liner

**Claims**

1. A refractory product (20) for continuous casting, containing a free carbon component in an amount of 10% by mass to 30% by mass, and a remainder in which: a main mineral phase is comprised of one or more selected from the group consisting of corundum, spinel, and periclase, wherein a content of the periclase is less than 40% by mass; and a total content of a silica component and a silicon carbide component is less than 15% by mass,

   wherein when a remainder after excluding a composition comprised of the free carbon component from a composition of the refractory product (20) is defined as 100% by volume, refractory particles having a particle size of greater than 0.3 mm account for 20% by volume or more, and refractory particles having a particle size of 0.045 mm or less account for 3% by volume to 30% by volume,
   and wherein an approximately continuous void layer is present around each of a plurality of coarse particles, at least one of which has a largest particle size among refractory particles in the refractory product (20), the approximately continuous void layer having a similar shape to the coarse particle, wherein a total thickness of the approximately continuous void layer across two positions on an interface between a carbon-containing matrix microstructure and the coarse particle, located on opposed sides of the void layer is in the range of 0.3% to 3% of the particle size of the coarse particle,
   and wherein the refractory product (20) has an apparent porosity of 16% or less, and a maximum thermal expansion rate at a temperature up to 1500°C is 0.6% or less;
   wherein the term "approximately continuous void layer", which is used in consideration of the actual state in verification, means that a void layer is actually present around the entire periphery of each refractory particle, but a part of the surface of the refractory particle is likely to be in contact with another refractory particle or the carbonaceous matrix during verification in the form of a microscopic observation sample, wherein such a contact area is not in a "coupled or bonded" state to an extent that the refractory particle is fixed; and
   wherein the amount of a free carbon component, the content of periclase, the content of a silica component, the content of a silicon carbide component, the volume of refractory particles having a particle size of greater than 0.3 mm, the volume of refractory particles having a particle size of 0.045 mm or less, the total thickness of the approximately continuous void layer across two positions on an interface between a carbon-containing matrix microstructure and the coarse particle, the porosity, and the thermal expansion rate at a temperature up to 1500°C are determined in accordance with the description.

2. The refractory product (20) for continuous casting, as claimed in claim 1, wherein the refractory particles having a particle size of greater than 0.3 mm account for 30% by volume or more, and the refractory particles having a particle size of 0.045 mm or less account for 5% by volume to 15% by volume.

3. The refractory product (20) for continuous casting, as claimed in claim 1 or 2, containing a boron component in an amount of 0.1% by mass to 3.0% by mass in terms of $B_2O_3$ equivalent.

4. The refractory product (20) for continuous casting, as claimed in any one of claims 1 to 3, containing, in the matrix microstructure, carbon fibers having an aspect ratio of 15 to 200, a content of the carbon fibers being 5% by mass or less.

5. A refractory member for continuous casting comprising the refractory product (20) for continuous casting as claimed in any one of claims 1 to 4, wherein the refractory product (20) for continuous casting is disposed in a part or entirety of an area of the refractory member to be brought into contact with molten steel.

**Patentansprüche**

1. Ein feuerfestes Produkt (20) zum Stranggießen, enthaltend eine freie Kohlenstoffkomponente in einer Menge von 10 Massen-% bis 30 Massen-% und einen Rest, in dem: eine Hauptmineralphase enthalten ist, die ein oder mehrere sind, ausgewählt aus der Gruppe bestehend aus Korund, Spinell und Periklas, wobei ein Gehalt an Periklas weniger als 40 Massen-% beträgt; und ein Gesamtgehalt an einer Siliziumdioxidkomponente und einer Siliziumkarbidkomponente weniger als 15 Massen-% beträgt,

wobei, wenn ein Rest nach Ausschluss einer Zusammensetzung, umfassend die freie Kohlenstoffkomponente, aus der Zusammensetzung des feuerfesten Produkts (20) als 100 Vol.-% definiert wird, feuerfeste Teilchen mit einer Teilchengröße von mehr als 0,3 mm 20 Vol.-% oder mehr ausmachen, und feuerfeste Teilchen mit einer Teilchengröße von 0,045 mm oder weniger 3 Vol.-% bis 30 Vol.-% ausmachen,
und wobei eine annähernd durchgehende Hohlraumschicht um jede einer Vielzahl von groben Teilchen vorhanden ist, von denen mindestens eine eine größte Teilchengröße unter den feuerfesten Teilchen im feuerfesten Produkt (20) aufweist, wobei die annähernd durchgehende Hohlraumschicht eine ähnliche Form wie das grobe Teilchen aufweist, wobei eine Gesamtdicke der annähernd durchgehenden Hohlraumschicht über zwei Positionen auf einer Grenzfläche zwischen einer kohlenstoffhaltigen Matrixmikrostruktur und dem groben Teilchen, die sich auf gegenüberliegenden Seiten der Hohlraumschicht befinden, im Bereich von 0,3 % bis 3 % der Teilchengröße des groben Teilchens liegt,
und wobei das feuerfeste Produkt (20) eine scheinbare Porosität von 16 % oder weniger aufweist und eine maximale Wärmeausdehnungsrate bei einer Temperatur von bis zu 1500 °C 0,6 % oder weniger beträgt;
wobei der Begriff "annähernd durchgehende Hohlraumschicht", der unter Berücksichtigung des tatsächlichen Zustands bei der Überprüfung verwendet wird, bedeutet, dass tatsächlich eine Hohlraumschicht um den gesamten Umfang jedes feuerfesten Teilchens vorhanden ist, aber ein Teil der Oberfläche des feuerfesten Teilchens während der Überprüfung in Form einer mikroskopischen Beobachtungsprobe möglicherweise mit einem anderen feuerfesten Teilchen oder der kohlenstoffhaltigen Matrix in Kontakt steht, wobei sich ein Kontaktbereich nicht in einem solchen "gekoppelten oder gebundenen" Zustand befindet, in dem das feuerfeste Teilchen fixiert ist; und
wobei die Menge einer freien Kohlenstoffkomponente, der Gehalt an Periklas, der Gehalt an einer Siliziumdioxidkomponente, der Gehalt an einer Siliziumkarbidkomponente, das Volumen der feuerfesten Teilchen mit einer Teilchengröße von mehr als 0,3 mm, das Volumen an feuerfesten Teilchen mit einer Teilchengröße von 0,045 mm oder weniger, die Gesamtdicke der annähernd durchgehenden Hohlraumschicht über zwei Positionen hinweg an einer Grenzfläche zwischen einer kohlenstoffhaltigen Matrixmikrostruktur und dem groben Teilchen, die Porosität und die Wärmeausdehnungsrate bei einer Temperatur von bis zu 1500 °C gemäß der Beschreibung bestimmt werden.

2. Das feuerfeste Produkt (20) zum Stranggießen nach Anspruch 1, wobei die feuerfesten Teilchen mit einer Teilchengröße von mehr als 0,3 mm 30 Vol.% oder mehr ausmachen und die feuerfesten Teilchen mit einer Teilchengröße von 0,045 mm oder weniger 5-Vol.% bis 15 Vol.-% ausmachen.

3. Das feuerfeste Produkt (20) zum Stranggießen nach Anspruch 1 oder 2, enthaltend eine Borkomponente in einer Menge von 0,1 Massen-% bis 3,0 Massen-%, bezogen auf das $B_2O_3$-Äquivalent.

4. Das feuerfeste Produkt (20) zum Stranggießen nach einem der Ansprüche 1 bis 3, enthaltend, in der Matrixmikrostruktur, Kohlenstofffasern mit einem Seitenverhältnis von 15 bis 200, wobei der Gehalt an Kohlenstofffasern 5 Massen-% oder weniger beträgt.

**5.** Ein feuerfestes Bauteil zum Stranggießen, umfassend das feuerfeste Produkt (20) zum Stranggießen nach einem der Ansprüche 1 bis 4, wobei das feuerfeste Produkt (20) zum Stranggießen in einem Teil oder in der Gesamtheit eines Bereichs des feuerfesten Bauteils angeordnet ist, das mit geschmolzenem Stahl in Kontakt gebracht werden soll.

**Revendications**

**1.** Produit réfractaire (20) pour coulée continue, contenant un composant carbone libre en une quantité de 10 % en masse à 30 % en masse, et un reste dans lequel : une phase minérale principale est constituée d'un ou plusieurs choisis dans le groupe constitué par le corindon, le spinelle, et le périclase, dans lequel la teneur en périclase est inférieure à 40 % en masse ; et la teneur totale en composant silice et en composant carbure de silicium est inférieure à 15 % en masse,

dans lequel, quand le reste, après qu'une composition constituée du composant carbone libre a été exclue de la composition du produit réfractaire (20), est défini comme étant de 100 % en volume, les particules réfractaires ayant une granulométrie supérieure à 0,3 mm représentent 20 % en volume ou plus, et les particules réfractaires ayant une granulométrie de 0,045 mm ou moins représentent de 3 % en volume à 30 % en volume, et dans lequel une couche de vide approximativement continue est présente autour de chacune parmi une pluralité de grosses particules, dont au moins une a une granulométrie maximale parmi les particules réfractaires dans le produit réfractaire (20), la couche de vide approximativement continue ayant une forme similaire à celle de la grosse particule, dans lequel l'épaisseur totale de la couche de vide approximativement continue entre deux positions sur une interface entre une microstructure de matrice contenant du carbone et la grosse particule, se trouvant sur des côtés opposés de la couche de vide, est située dans la plage allant de 0,3 % à 3 % de la granulométrie de la grosse particule, et lequel produit réfractaire (20) a une porosité apparente de 16 % ou moins, et dans lequel le taux de dilatation thermique maximal à une température allant jusqu'à 1500 °C est de 0,6 % ou moins ; dans lequel l'expression "couche de vide approximativement continue", qui est utilisée en considération de l'état réel en cours de vérification, signifie qu'une couche de vide est bien présente autour de toute la périphérie de chaque particule réfractaire, mais une partie de la surface de la particule réfractaire est susceptible d'être en contact avec une autre particule réfractaire ou la matrice carbonée durant une vérification sous la forme d'un échantillon d'observation microscopique, dans lequel une telle zone de contact n'est pas dans un état "couplé ou lié" dans une mesure telle que la particule réfractaire soit fixée ; et dans lequel la quantité de composant carbone libre, la teneur en périclase, la teneur en composant silice, la teneur en composant carbure de silicium, le volume des particules réfractaires ayant une granulométrie supérieure à 0,3 mm, le volume de particules réfractaires ayant une granulométrie de 0,045 mm ou moins, l'épaisseur totale de la couche de vide approximativement continue entre deux positions sur une interface entre une microstructure de matrice contenant du carbone et la grosse particule, la porosité, et le taux de dilatation thermique à une température allant jusqu'à 1500 °C, sont déterminés conformément à la description.

**2.** Produit réfractaire (20) pour coulée continue selon la revendication 1, dans lequel les particules réfractaires ayant une granulométrie supérieure à 0,3 mm représentent 30 % en volume ou plus, et les particules réfractaires ayant une granulométrie de 0,045 mm ou moins représentent de 5 % en volume à 15 % en volume.

**3.** Produit réfractaire (20) pour coulée continue selon la revendication 1 ou 2, contenant un composant bore en une quantité de 0,1 % en masse à 3,0 % en masse en termes d'équivalent $B_2O_3$.

**4.** Produit réfractaire (20) pour coulée continue selon l'une quelconque des revendications 1 à 3, contenant, dans la microstructure de matrice, des fibres de carbone ayant un rapport d'aspect de 15 à 200, la teneur en les fibres de carbone étant de 5 % en masse ou moins.

**5.** Elément réfractaire pour coulée continue comprenant le produit réfractaire (20) pour coulée continue selon l'une quelconque des revendications 1 à 4, dans lequel le produit réfractaire (20) pour coulée continue est disposé dans une partie ou dans la totalité d'une zone de l'élément réfractaire devant être mis en contact avec de l'acier fondu.

【Fig. 1】

【Fig. 2】

【Fig. 3】

(a)

(b)

【Fig. 4】

【Fig. 5】

20

20

【Fig. 6】

20

20

【Fig. 7】

【Fig. 8】

**REFERENCES CITED IN THE DESCRIPTION**

**Patent documents cited in the description**

- JP 6027676 B
- JP 5637630 B